# EUROPEAN PATENT SPECIFICATION

(11) **EP 0 727 462 B1**
(45) Date of publication and mention of the grant of the patent: **23.12.1998**
(21) Application number: 96300952.7
(22) Date of filing: 12.02.1996
(51) Int. Cl.: C08L 83/04

(54) **Silicone gel composition**
Silicongelzusammensetzung
Composition de gel de silicone

(30) Priority: 20.02.1995 JP 55064/95
(43) Date of publication of application: 21.08.1996
(73) Proprietor: Dow Corning Toray Silicone Co., Ltd., Chuo-ku, Tokyo (JP)
(72) Inventor: Enami, Hiroji, c/o Dow Corning Toray, Ichihara-shi, Chiba-Pref. (JP); Hamada, Yuji, c/o Dow Corning Toray, Ichihara-shi, Chiba-Pref. (JP); Saiki, Takeaki, c/o Dow Corning Toray, Ichihara-shi, Chiba-Pref. (JP)
(74) Representative: Hall, Marina

(56) References cited:
- EP-A- 0 509 515
- EP-A- 0 532 362
- EP-A- 0 614 959
- DE-A- 2 211 474

## Description

This invention relates to a silicone gel composition that forms highly heat-resistant silicone gels which exhibit excellent vibration-isolating performance.

Vibration-isolating silicone gels are used to protect electronic components from shock and vibration. There have been various proposals with regard to these compositions and the prior art is generally represented by JP-As 3-139565; 5-209127; and 6-234922.

The silicone gels afforded by cure of the silicone gel compositions proposed in JPA's 3-139565 and 6-234922 do exhibit an excellent vibration-isolating performance, but unfortunately they suffer from a low heat resistance. The silicone gel afforded by cure of the composition of JP-A 5-209127 also exhibits an excellent vibration-isolating performance. However, this silicone gel does not exhibit a satisfactory degree of heat resistance. As a result of their low heat resistance, these silicone gels exhibit a timewise decline in penetration when the gels are heated, and this prevents their use in applications where the gel will be exposed to elevated temperatures.

We have achieved the present invention as a result of extensive investigations directed to solving the problems described above.

In specific terms, the present invention takes as its object the introduction of a silicone gel composition that forms a highly heat-resistant and strongly vibration-isolating silicone gel.

The present invention introduces a silicone gel composition comprising
(A) 100 parts by weight of a diorganopolysiloxane that has a viscosity at 25°C of 50 to 100,000 mPa.s (centipoise) and contains at least 2 silicon-bonded alkenyl groups in each molecule,
(B) 1 to 50 parts by weight of an organopolysiloxane resin with the average unit formula

   (R₃SiO_{1/2})ₐ(SiO_{4/2})_{1.0}

   in which R denotes monovalent hydrocarbon groups excluding alkenyl groups and a is from 0.6 to 4.0,
(C) an organopolysiloxane that has a viscosity at 25°C of 1 to 1,000,000 mPa.s (centipoise) and contains, on average, at least 2 silicon-bonded hydrogen atoms in each molecule, in a quantity that provides 0.2 to 5.0 moles of silicon-bonded hydrogen per mole of silicon-bonded alkenyl in component (A),
and
(D) a catalytic quantity of a hydrosilylation reaction catalyst,
wherein said silicone gel composition is capable of being cured to yield a silicone gel.

A silicone gel according to the invention has a durometer according to Japanese Industrial Standard (JIS) K 6301 of 0 (JIS A), a penetration according to JIS K 2220 no greater than 300, and a loss factor (tan delta) of 0.1 to 2 at a shear frequency of 0.1 to 10 Hz and 25°C.

The diorganopolysiloxane, component (A), is the base component of our composition. It contains at least 2 silicon-bonded alkenyl groups in each molecule. This component is exemplified by vinyl, allyl, and propenyl, with vinyl being preferred. The bonding position for the alkenyl group is not crucial, and it may be bonded on the molecular chain, for example, in terminal or nonterminal positions. The non-alkenyl silicon-bonded organic groups in component (A) are alkyl groups such as methyl, ethyl, and propyl; aryl groups such as phenyl, tolyl, and xylyl; and aralkyl groups such as benzyl or phenethyl. Methyl and phenyl are particularly preferred. Component (A) has a viscosity at 25°C of 50 to 100,000 mPa.s (centipoise) and preferably has a viscosity at 25°C of 100 to 10,000 mPa.s (centipoise). If the viscosity of component (A) is below 50 mPa.s (centipoise), the resulting silicone gel has reduced physical properties. If the viscosity of component (A) is in excess of 100,000 mPa.s (centipoise), the handling characteristics of the silicone gel composition are impaired. Component (A) has an essentially linear molecular structure, although branching may be present to some degree. Component (A) is exemplified by dimethylvinylsiloxy-endblocked dimethylpolysiloxanes, dimethylvinylsiloxy-endblocked dimethylsiloxanemethylphenylsiloxane copolymers, dimethylvinylsiloxy-endblocked dimethylsiloxane-methylvinylsiloxane copolymers, dimethylsiloxane-methylvinylsiloxane copolymers capped at one molecular terminal by the dimethylvinylsiloxy group and at the other terminal by the trimethylsiloxy group, and trimethylsiloxy-endblocked dimethylsiloxane-methylvinylsiloxane copolymers.

The organopolysiloxane resin, component (B), improves the heat resistance of our silicone gel when cured, and does so without impairing the vibration-isolating characteristics of the silicone gel. R in the formula for component (B) represents monovalent hydrocarbon groups excluding alkenyl groups, and is exemplified by alkyl groups, such as methyl, ethyl, and propyl; aryl groups, such as phenyl, tolyl, and xylyl; and aralkyl groups, such as benzyl or phenethyl. The preferred R is an alkyl group. More preferredly, R is a methyl or ethyl group. The subscript a in the formula has a value from 0.6 to 4.0.

Component (B) is added at 1 to 50 weight parts per 100 weight parts component of (A). The addition of less than 1 weight part component (B) per 100 weight parts component (A) results in a reduced heat resistance and impaired vibration-isolating performance. At the other end of the range, the addition of more than 50 weight parts impairs the handling characteristics of the silicone gel composition. When component (B) is a solid at room temperature, it is preferably used after its preliminary dissolution in component (A).

The organopolysiloxane constituting component (C), which functions to cure the instant composition, contains on average at least 2 silicon-bonded hydrogen atoms in each molecule. The bonding position for this silicon-bonded hydrogen is not crucial, and the SiH may be bonded in the molecular chain, for example, in terminal or nonterminal positions. The silicon-bonded organic groups in component (C) are exemplified by alkyl groups, such as methyl, ethyl, and propyl; aryl groups, such as phenyl, tolyl, and xylyl; and aralkyl groups, such as benzyl or phenethyl. Methyl and phenyl are particularly preferred. The molecular structure of component (C) is not crucial, and is exemplified by straight-chain, partially branched straight-chain, branched, and network structures and by mixtures of two or more of these molecular structures. Component (C) has a viscosity at 25°C of 1 to 1,000,000 mPa.s (centipoise). The high volatility of component (C) at viscosities below 1 mPa.s (centipoise) leads to an unstable silicone gel composition. On the other hand, at viscosities above 1,000,000 mPa.s (centipoise) the industrial production of component (C) becomes quite problematic.

Component (C) is added in a quantity that yields 0.2 to 5.0 moles, and preferably 0.4 to 1.0 mole of silicon-bonded hydrogen from this component per mole of silicon-bonded alkenyl in component (A). The corresponding silicone gel composition will not fully cure when component (C) supplies less than 0.2 mole silicon-bonded hydrogen per mole of silicon-bonded alkenyl in component (A). When this parameter exceeds 5.0 moles, the heat resistance of the resulting cured silicone gel will decline with the passage of time.

The hydrosilylation reaction catalyst, component (D), accelerates the cure of the instant composition, and the known hydrosilylation reaction catalysts of the art are used. Component (D) is exemplified by platinum catalysts, such as chloroplatinic acid, platinum-olefin complexes, platinum-ketone complexes, platinum-vinylsiloxane complexes, platinum black, and platinum supported on a powder; palladium catalysts, such as tetrakis(triphenylphosphine)palladium, and palladium black-triphenylphosphine mixtures; and rhodium catalysts. Platinum catalysts are particularly preferred.

Component (D) is added in a catalytic quantity. For example, when platinum catalyst is used as component (D), the catalyst is preferably added to give 0.01 to 1,000 weight-ppm of platinum metal in the instant composition, and is preferably added in a quantity that gives 0.1 to 500 weight-ppm of platinum metal.

The silicone gel composition of the present invention is prepared by mixing components (A), (B), (C), and (D) to homogeneity. Other, optional components that may be admixed into the composition include addition reaction inhibitors, such as acetylenic compounds, organophosphorus compounds, and vinyl-functional siloxane compounds; inorganic fillers, such as fumed silica, wet-process silica, powdered quartz, titanium oxide, calcium carbonate, magnesium carbonate, zinc oxide, iron oxide, diatomaceous earth, and carbon black; the aforesaid inorganic fillers that have been treated with a hydrophobing surface treatment with an organosilicon compound; heat stabilizers; pigments; and dyes.

The silicone gel produced by the cure of our silicone gel composition has a durometer according to JIS K 6301 of zero (JIS A), a penetration according to JIS K 2220 no greater than 300, and a loss factor (tan δ: shear loss modulus/shear storage modulus) of 0.1 to 2 at a shear frequency of 0.1 to 10 Hz and 25°C. Moreover, our silicone gel composition exhibits excellent handling characteristics and cures to give a highly heat-resistant and strongly vibration-isolating silicone gel that will adhere to a variety of substrates. These features make our composition highly qualified for application as a vibration-isolating element in various types of electrical and electronic devices, for example, for potting and encapsulation.

The silicone gel composition of the present invention will be explained in greater detail below through working examples. The property values reported in the examples were measured at 25°C. The loss factor (tan δ) of the silicone gel was measured using a dynamic analyzer from Rheometrics™, Inc., on a silicone gel sample fabricated in the form of a circular plate with a thickness of 5 to 6 mm and a diameter of 25 mm. The durometer (JIS A) of the silicone gel was measured according to JIS K 6301, and the penetration was measured using a 6.35 mm (one-quarter inch) cone according to JIS K 2220. The heat resistance of the silicone gel was evaluated through the change in penetration induced by heating for 3 days at 150°C.

### Example 1

A silicone gel composition was prepared by mixing the following to homogeneity: 100 parts by weight of dimethylvinylsiloxy-endblocked dimethylpolysiloxane, with a viscosity of 930 mPa.s (centipoise), 11.7 parts by weight of a organopolysiloxane resin with the average unit formula

((CH₃)₃SiO_{1/2})_{0.8}(SiO_{4/2})_{1.0}

0.8 parts by weight of trimethylsiloxy-endblocked dimethylsiloxane-methylhydrogensiloxane copolymer, with a viscosity of 5 mPa.s (centipoise) and a SiH content of 0.75 weight%, and 0.7 mole of silicon-bonded hydrogen per mole of silicon-bonded alkenyl in the composition, and platinum-divinyltetramethyldisiloxane complex in a quantity that provided 5 weight-ppm of platinum metal in the composition. The composition was degassed in a vacuum and then heated at 70°C for 30 minutes to yield a silicone gel. This composition had excellent handling characteristics, and the silicone gel itself adhered well to substrates. The loss factor (tan δ) for this silicone gel was 0.35 at a shear frequency of 0.1 Hz, and was 0.60 at a shear frequency of 10 Hz. It had a penetration of 70 immediately after curing and a penetration of 68 after standing for 3 days at 150°C.

### Example 2

A silicone gel composition was prepared by mixing the following to homogeneity: 100 weight parts of dimethylvinylsiloxy-endblocked dimethylpolysiloxane, with a viscosity of 1,900 mPa.s (centipoise), 5.5 weight parts of organopolysiloxane resin with the average unit formula

((CH₃)₃SiO_{1/2})_{0.8}(SiO_{4/2})_{1.0}

0.4 weight part of trimethylsiloxy-endblocked dimethylsiloxane-methylhydrogensiloxane copolymer with a viscosity of 5 mPa.s (centipoise), and a SiH content of 0.75 weight%, and 0.71 mole of silicon-bonded hydrogen per mole of silicon-bonded alkenyl in the composition, and platinum-divinyltetramethyldisiloxane complex in a quantity that provided 5 weight-ppm of platinum metal in the composition. The composition was degassed in a vacuum and was then heated at 70°C for 30 minutes to yield a silicone gel. This composition had excellent handling characteristics, and the silicone gel itself adhered well to substrates. The loss factor (tan δ) for this silicone gel was 0.48 at a shear frequency of 0.1 Hz, and was 0.80 at a shear frequency of 10 Hz. It had a penetration of 53 immediately after curing and a penetration of 51 after standing for 3 days at 150°C.

### Comparative Example 1

A silicone gel composition was prepared by mixing the following to homogeneity: 100 weight parts of dimethylvinylsiloxy-endblocked dimethylpolysiloxane with a viscosity of 1,000 mPa.s (centipoise), 0.72 weight part of dimethylhydrogensiloxy-endblocked dimethylsiloxane-methylhydrogensiloxane copolymer with a viscosity of 10 mPa.s (centipoise), and 0.55 mole of silicon-bonded hydrogen per mole of silicon-bonded alkenyl in the composition, and platinum-divinyltetramethyldisiloxane complex in a quantity that provided 5 weight-ppm of platinum metal in the composition. The composition was degassed in a vacuum and then heated at 70°C for 30 minutes to yield a silicone gel. This composition had excellent handling characteristics, but the silicone gel itself adhered poorly to substrates. The loss factor (tan δ) for this silicone gel was 0.05 at a shear frequency of 0.1 Hz, and was 0.64 at a shear frequency of 10 Hz. It had a penetration of 58 immediately after curing and a penetration of 51 after standing for 3 days at 150°C.

### Comparative Example 2

A silicone gel composition was prepared by mixing the following to homogeneity: 100 weight parts of dimethylvinylsiloxy-endblocked dimethylpolysiloxane with a viscosity of 1,000 mPa.s (centipoise), 0.56 weight part of an organopolysiloxane resin with the average unit formula

((CH₃)₂HSiO_{1/2})_{1.8}(SiO_{4/2})_{1.0}

and 0.43 mole of silicon-bonded hydrogen per mole of silicon-bonded alkenyl in the composition, and platinum-divinyltetramethyldisiloxane complex in a quantity that provided 5 weight-ppm of platinum metal in the composition. The composition was degassed in a vacuum and then heated at 70°C for 30 minutes to yield a silicone gel. This composition had excellent handling characteristics, but the silicone gel itself adhered poorly to substrates. The loss factor (tan δ) for this silicone gel was 0.03 at a shear frequency of 0.1 Hz, and was 0.60 at a shear frequency of 10 Hz. It had a penetration of 55 immediately after curing and a penetration of 31 after standing for 3 days at 150°C.

### Comparative Example 3

A silicone gel composition was prepared by mixing the following to homogeneity: 100 weight parts of dimethylvinylsiloxy-endblocked dimethylpolysiloxane with a viscosity of 930 mPa.s (centipoise), 11.7 weight parts of an organopolysiloxane resin with the average unit formula

((CH₃)₃SiO_{1/2})_{0.7}((CH₃)₂(CH₂=CH)SiO_{1/2})_{0.1}(SiO_{4/2})_{1.0}

13.1 weight parts of dimethylhydrogensiloxy-endblocked dimethylpolysiloxane with a viscosity of 17 mPa.s (centipoise), an SiH content of 0.135 weight%, and 0.73 mole of silicon-bonded hydrogen per mole of silicon-bonded alkenyl in the composition, and platinumdivinyltetramethyldisiloxane complex in a quantity that provided 5 weight-ppm of platinum metal in the composition. The composition was degassed in a vacuum and then heated at 70°C for 30 minutes to yield a silicone gel. This composition had excellent handling characteristics, but the silicone gel itself adhered poorly to substrates. The loss factor (tan 6) for this silicone gel was 0.65 at a shear frequency of 0.1 Hz, and was 0.70 at a shear frequency of 10 Hz. It had a penetration of 60 immediately after curing and a penetration of 41 after standing for 3 days at 150°C.

### Comparative Example 4

A silicone gel composition was prepared by mixing the following to homogeneity: 100 weight parts of dimethylvinylsiloxy-endblocked dimethylpolysiloxane with a viscosity of 1,000 mPa.s (centipoise), 80 weight parts of trimethylsiloxy-endblocked dimethylpolysiloxane with a viscosity of 1,000 mPa.s (centipoise), 0.92 weight part of dimethylhydrogensiloxy-endblocked dimethylsiloxane-methylhydrogensiloxane copolymer with a viscosity of 10 mPa.s (centipoise), and 0.67 mole of silicon-bonded hydrogen per mole of silicon-bonded alkenyl in the composition, and platinum-divinyltetramethyldisiloxane complex in a quantity that provided 5 weight-ppm of platinum metal in the composition. The composition was degassed in a vacuum and then heated at 70°C for 30 minutes to yield a silicone gel. This composition had excellent handling characteristics, but the silicone gel itself adhered poorly to substrates. The loss factor (tan δ) for this silicone gel was 0.04 at a shear frequency of 0.1 Hz, and was 0.66 at a shear frequency of 10 Hz. It had a penetration of 48 immediately after curing and a penetration of 40 after standing for 3 days at 150°C.

## Claims

1. A silicone gel compositicn comprising
(A) 100 parts by weight of a diorganopolysiloxane having a viscosity at 25°C of 50 to 100,000 mPa.s (centipoise) and containing at least 2 silicon-bonded alkenyl groups in each molecule;
(B) 1 to 50 parts by weight of an organopolysiloxane resin with the average unit fcrmula
(R₃SiO_{1/2})ₐ(SiO_{4/2})_{1.0}
where each R is a monovalent hydrocarbon group, other than an alkenyl group, and a is from 0.6 to 4.0;
(C) an organopolysiloxane having a viscosity at 25°C of 1 to 1,000,000 mPa.s (centipoise) and containing an average of at least 2 silicon-bonded hydrogen atoms in each molecule, in a quantity that provides 0.2 to 5.0 moles of silicon-bonded hydrogen per mole of silicon-bonded alkenyl in component (A);
and
(D) a catalytic quantity of a hydrosilylation reaction catalyst,
wherein said silicone gel composition is capable of being cured to yield a silicone gel.

2. A silicone gel composition according to claim 1 wherein component (A) is selected from dimethylvinylsiloxy-endblocked dimethylpolysiloxanes, dimethylvinylsiloxy-endblocked dimethylsiloxane-methylphenylsiloxane copolymers, dimethylvinylsiloxy-endblocked dimethylsiloxane-methylvinylsiloxane copolymers, dimethylsiloxane-methylvinylsiloxane copolymers capped at one molecular terminal by the dimethylvinylsiloxy group and at the other terminal by the trimethylsiloxy group, and trimethylsiloxy-endblocked dimethylsiloxane-methylvinylsiloxane copolymers.

3. A silicone gel composition according to claim 1 or claim 2 wherein R of component (B) is an alkyl group, preferably selected from a methyl or ethyl group.

4. A silicone gel composition according to any of claims 1 to 3 wherein catalyst (D) is a platinum catalyst.

5. A silicone gel composition according to claim 4 wherein said platinum catalyst is added to result is 0.01 to 1,000 weight-ppm of platinum metal in the instant composition.

6. A method of preparing the silicone gel composition of any of claims 1 to 5 wherein the components (A) to (D) are mixed to homogeneity.

## Patentansprüche

1. Gelförmige Siliconzusammensetzung, enthaltend:
(A) 100 Gewichtsteile eines Diorganopolysiloxans, das bei 25°C eine Viskosität von 50-100.000 mPa·s (Centipoise) aufweist und in jedem Molekül mindestens 2 an Silicium gebundene Alkenylgruppen enthält,
(B) 1-50 Gewichtsteile eines Organopolysiloxanharzes mit einer mittleren Einheit der Formel
(R₃SiO_{1/2})ₐ(SiO_{4/2})_{1,0},
in der jedes R eine einwertige Kohlenwasserstoffgruppe ist, die sich von einer Alkenylgruppe unterscheidet, und a von 0,6-4,0 beträgt,
(C) ein Organopolysiloxan, das bei 25°C eine Viskosität von 1-1.000.000 mPa·s (Centipoise) aufweist und im Mittel in jedem Molekül mindestens 2 an Silicium gebundene Wasserstoffatome enthält, in einer Menge, so daß 0,2-5,0 Mol an Silicium gebundener Wasserstoff pro Mol an Silicium gebundene Alkenylgruppen von Bestandteil (A) vorhanden sind, und
(D) eine katalytische Menge eines eine Hydrosilylierungsreaktion katalysierenden Katalysators,
wobei die gelförmige Siliconzusammensetzung zu einem Silicongel aushärtbar ist.

2. Gelförmige Siliconzusammensetzung nach Anspruch 1, dadurch gekennzeichnet, daß Bestandteil (A) aus endständige Dimethylvinylsiloxygruppen enthaltenden Dimethylpolysiloxanen, endständige Dimethylvinylsiloxygruppen enthaltenden Dimethylsiloxan-Methylphenylsiloxan-Copolymeren, endständige Dimethylvinylsiloxygruppen enthaltenden Dimethylsiloxan-Methylvinylsiloxan-Copolymeren, Dimethylsiloxan-Methylvinylsiloxan-Copolyeren, die an einem Molekülende mit der Dimethylvinylsiloxygruppe und am anderen Ende mit der Trimethylsiloxygruppe verkappt sind, und endständige Trimethylsiloxygruppen enthaltenden Dimethylsiloxan-Methylvinylsiloxan-Copolmyeren ausgewählt ist.

3. Gelförmige Siliconzusammensetzung nach Anspruch 1 oder Anspruch 2, dadurch gekennzeichnet, daß R von Bestandteil (B) ein Alkylgruppe ist, vorzugsweise aus einer Methyl- oder Ethylgruppe ausgewählt.

4. Gelförmige Siliconzusammensetzung nach einem der Ansprüche 1-3, dadurch gekennzeichnet, daß der Katalysator (D) ein Platinkatalysator ist.

5. Gelförmige Siliconzusammensetzung nach Anspruch 4, dadurch gekennzeichnet, daß der Platinkatalysator in einer Menge zugesetzt ist, so daß 0,01-1.000 Gewichts-ppm Platinmetall in der vorliegenden Zusammensetzung vorhanden sind.

6. Verfahren zum Herstellen der gelförmigen Siliconzusammensetzung nach einem der Ansprüche 1-5 durch Mischen der Bestandteile (A)-(D) bis zur Homogenität.

## Revendications

1. Une composition de gel de silicone comprenant
(A) 100 parties en poids d'un diorganopolysiloxane ayant une viscosité à 25°C de 50 à 100 000 mPa.s (centipoises) et contenant au moins 2 groupes alcényles liés au silicium dans chaque molécule ;
(B) 1 à 50 parties en poids d'une résine d'organopolysiloxane ayant la formule moyenne de motifs
(R₃SiO_{1/2})ₐ(SiO_{4/2})_{1,0}
où chaque R est un groupe hydrocarboné monovalent, autre qu'un groupe alcényle, et a est de 0,6 à 4,0 ;
(C) un organopolysiloxane ayant une viscosité à 25°C de 1 à 1 000 000 mPa.s (centipoises) et contenant en moyenne au moins 2 atomes d'hydrogène liés au silicium dans chaque molécule, en une quantité qui fournit 0,2 à 5,0 moles d'hydrogène lié au silicium par mole de groupes alcényles liés au silicium dans le composant (A) ;
et
(D) une quantité catalytique d'un catalyseur de réaction d'hydrosilylation,
ladite composition de gel de silicone étant capable d'être durcie pour former un gel de silicone.

2. Une composition de gel de silicone selon la revendication 1, dans laquelle le composant (A) est choisi parmi les diméthylpolysiloxanes terminés par des groupes diméthylvinylsiloxy, les copolymères diméthylsiloxaneméthylphénylsiloxane terminés par des groupes diméthylvinylsiloxy, les copolymères diméthylsiloxane-méthylvinylsiloxane terminés par des groupes diméthylvinylsiloxy, les copolymères diméthylsiloxane-méthylvinylsiloxane coiffés à une extrémité moléculaire par le groupe diméthylvinylsiloxy et à l'autre extrémité par le groupe triméthylsiloxy, et les copolymères diméthylsiloxane-méthylvinylsiloxane terminés par des groupes triméthylsiloxy.

3. Une composition de gel de silicone selon la revendication 1 ou la revendication 2, dans laquelle R du composant (B) est un groupe alkyle, de préférence choisi parmi un groupe méthyle ou éthyle.

4. Une composition de gel de silicone selon l'une quelconque des revendications 1 à 3, dans laquelle le catalyseur (D) est un catalyseur au platine.

5. Une composition de gel de silicone selon la revendication 4, dans laquelle ledit catalyseur au platine est ajouté pour donner 0,01 à 1000 ppm en poids de platine métallique dans la présente composition.

6. Un procédé de préparation de la composition de gel de silicone de l'une quelconque des revendications 1 à 5, dans lequel les composants (A) à (D) sont mélangés jusqu'à homogénéité.
